# EUROPÄISCHE PATENTSCHRIFT

(11) **EP 0 383 257 B1**
(45) Veröffentlichungstag und Bekanntmachung des Hinweises auf die Patenterteilung: **08.12.1993**
(21) Anmeldenummer: 90102795.3
(22) Anmeldetag: 13.02.1990
(51) Int. Cl.: B65G 1/133

(54) **Lagereinrichtung**
Storage installation
Installation d'entrepôt

(30) Priorität: 14.02.1989 DE 3904384
(43) Veröffentlichungstag der Anmeldung: 22.08.1990
(73) Patentinhaber: Lista Neuburg GmbH + Co., D-86476 Neuburg (DE)
(72) Erfinder: Katzenschwanz, Norbert, Dr.-Ing., D-8909 Neuburg a.d.Kammel (DE)
(74) Vertreter: Kahler, Kurt, Dipl.-Ing.

(56) Entgegenhaltungen:
- PATENT ABSTRACTS OF JAPAN, unexamined applications, M Field, Band 9, Nr. 84, 13. April 1985, THE PATENT OFFICE JAPANESE GOVERNEMENT, Seite 67 M 371,

## Beschreibung

Die Erfindung betrifft eine Lagereinrichtung gemäß den oberbegrifflichen Merkmalen des Patentanspruches 1.

Aus der EP-A-0 242 409 ist eine derartige Lagervorrichtung mit einem horizontalen Umlaufregal bekannt. Im Freiraum zwischen den horizontal umlaufenden Lagergutträgern ist hierbei eine Ausstoßeinheit für Behälter angeordnet, die mehrere Behälter gemeinsam an einer Längsseite des Umlaufförderers nach außen hin auf ein Förderband ausschiebt. Hierbei ist jedoch keine Kompaktanordnung von mehreren Regaleinheiten an ihren Längsseiten möglich, da an diesen Stellen die zu-/abfördernden Transportvorrichtungen vorgesehen sind.

Aus der EP-C-0 022 441 ist eine Lagereinrichtung mit einer Vielzahl von um vertikale Achsen umlaufenden Lagergutträgern bekannt, an deren äußeren Umlenkbereich ein Höhenförderer vorgesehen ist, der einen senkrecht auf- und abbewegbaren Schlitten aufweist. Am Schlitten ist eine waagrecht bewegbare Übergabevorrichtung für das Ein-/Auslagern des Lagergutes vorgesehen, wobei das Lagergut bzw. die ein-/auszulagernden Gegenstände in Behältern aufbewahrt werden, die in den Kammern der Lagergutträger Aufnahme finden. Die Umlaufförderer können dabei zu einer Großraum-Lageranlage mit mehreren eng nebeneinanderstehenden Umlaufförderern zusammengefaßt werden.

Zur Einlagerung dieser Behälter dient ein Mitnehmerarm, der an einer Kette den Behälter in die Lageranlage hineinschiebt, während zur Auslagerung bevorzugt Saugeinrichtungen dienen, die an dem Mitnehmerarm angeordnet sind und den Behälter von außen ergreifen können. Diese Lagervorrichtung setzt die Verwendung von gleichartigen Behältern zwingend voraus, so daß jedes Lagergut zunächst in derartige Container oder Boxen verpackt werden muß, um eine sichere Handhabung und Funktion der Entnahmevorrichtung erreichen zu können.

Weiterhin ist nachteilig, daß die Übergabevorrichtung am auf-/abbewegbaren Schlitten eine Vielzahl von elektrischen oder pneumatischen Antrieben für die Quer-, Höhen- und Einschiebebewegung, sowie den Saugbetrieb benötigt und bei jedem Positionswechsel mitbewegen muß. Dies bedingt ein erheblichen Bauaufwand und ein beträchtliches, mitzubewegendes Totgewicht, so daß den erreichbaren Beschleunigungen des Regalbediengerätes bei Positionswechseln Grenzen gesetzt sind. Somit können nur relativ geringe Entnahme- bzw. Einlagerungsgeschwindigkeiten erreicht werden.

Weiterhin ist aus der EP-A-0 286 986 eine Lagervorrichtung bekannt, bei der die Endlos-Umlaufförderer in mehreren Ebenen um horizontale Achsen umlaufen. Vor dieser Lageranlage ist am Kopfende ebenfalls ein Regalbediengerät vorgesehen, das zum Ansteuern vor bestimmter Regalstellen vertikal an einem Hubmast und horizontal verfahrbar ist, sowie zur Entnahme mit einem teleskopisch aus-/einfahrbaren Aufnahmetisch ausgerüstet ist.

Auch bei dieser Ausführung treffen auf Grund der Ansammlung von verschiedenen Bewegungsrichtungen und -achsen an einem Regalbediengerät die oben genannten Nachteile bezüglich Bauaufwand und erreichbarer Beschleunigung zu.

Weitere übliche Entnahmevorrichtungen sind zangenartige Greifer oder Gabeln, die das Lagergut seitlich oder von unten her umfassen. Dadurch wird jedoch zum Eingriff derartiger Greifer ein zusätzlicher Freiraum in jeder Kammer benötigt, der als Lagervolumen nicht nutzbar ist. Diese vor allem bei Hochregallagern angewendete Lösung mit von außen her in die jeweilige Kammer hineinragende Greifvorrichtung bedingt somit einen erhöhten Platzbedarf der gesamten Lageranlage.

Aus der DE-OS 35 14 932 ist zudem ein Umlaufförderer bekannt, dessen Lagergutträger jedoch in vertikaler Richtung umlaufen. Innerhalb des durch die Kettenräder bedingten Zwischenraumes ist eine Ausstoßvorrichtung vorgesehen, die auf etwa halber Höhe des Paternosterschrankes einzelne Einschübe auf ein davor verlaufendes Förderband ausschieben kann. Durch die Anordnung des Förderbandes an einer Längsseite des Paternosterschrankes ist nur eine zeilenförmige Aneinanderreihung einzelner Paternosterschränke zur Ermöglichung eines Großraumlagers möglich, jedoch nicht eine Kompaktanordnung der Umlaufförderer mit ihren Längsseiten, wie dies in der EP-C-0 022 441 in einer Ausführungsform vorgeschlagen ist.

Demzufolge liegt der Erfindung die Aufgabe zugrunde, die obengenannten Nachteile zu vermeiden und eine einfache und platzsparende Lagervorrichtung zu schaffen, die eine schnelle und sichere Ein-/Auslagerung und die Kompaktanordnung mehrerer Lagereinheiten ermöglicht.

Diese Aufgabe wird gelöst durch die kennzeichnenden Merkmale des Patentanspruches 1.

Durch die Anordnung der Ein-/Auslagervorrichtung am Umlenkbereich und im Freiraum des Umlaufförderers ergibt sich eine platzsparende Lösung, da der ansonsten ungenutzte Raum zwischen den Lagergutträgern nunmehr genutzt werden kann. Vielachsige, bauaufwendige Hubgerüste im Kopfbereich des Umlaufförderers können somit vermieden werden und weiterfördernde Einrichtungen, wie beispielsweise Förderbänder können ganz an den Umlaufförderer herangerückt werden, so daß sich ein beträchtlicher Raumgewinn ergibt.

Zudem ermöglicht diese Anordnung in besonders vorteilhafter Weise die Aneinanderreihung einer beliebigen Zahl von Umlaufförderern an ihren jeweiligen Längsseiten, so daß sich eine sehr kompakte Lageranlage ohne wesentliche Toträume ergibt. In dieser Ausgestaltung ist die Anordnung einer gemeinsamen Zu-/Abfördereinrichtung, wie z.B. eines Förderbandes, besonders vorteilhaft, da sich hieraus eine automatische Ein-/Auslageranlage ergibt, die sich insbesondere für die sog. vollautomatische Kommissionierung eignet. In vorteilhafter Ausgestaltung ist eine Ein-/Auslagervorrichtung an einer vertikalen Führung auf die Höhe der jeweiligen Lagergutträger verschiebbar, so daß sich mit einer einzigen Ein-/Auslagervorrichtung hunderte von Lagergutträgern bedienen lassen.

In einfachster Ausführung weist die Ein-/Auslagervorrichtung einen Ausstoßarm mit einem daran angeordneten Saugnapf zum Ausschieben und Hereinziehen von Lagergut auf. Eine derartige Ausführung weist somit lediglich zwei Antriebe auf, so daß keine aufwendigen Verzweigungsgetriebe oder Schleppkabel nötig wären, die eine hohe Beschleunigung bei Positionswechsel vermeiden würden. Diese Aufteilung der Massen macht sich somit vorteilhaft in der möglichen Ein-/Auslagergeschwindigkeit bemerkbar.

In besonders vorteilhafter Ausgestaltung wird die Führung für den höhenbeweglichen Ausstoßarm der Auslagervorrichtung durch die vertikale Umlenkachse des Umlaufförderers selbst gebildet. In vorteilhafter Weise können somit der Umlaufförderer mit den Lagergutträgern und die Ein-/Auslagervorrichtung von einem gemeinsamen Motor angetrieben werden, wobei der jeweils nicht benötigte Antrieb abgekuppelt wird. Dabei wird die Tatsache benutzt, daß während der Ein-/Auslagerung die Lagergutträger selbst stillstehen bzw. im umgekehrten Falle während der Aus-/Einlagerung die Lagergutträger stillstehen.

Eine weitere Beschleunigung der Ein-/Auslagerung von Lagergut ergibt sich, wenn außen am Umlenkbereich eine zweite Ein-/Auslagervorrichtung vorgesehen ist. Diese beiden Ein-/Auslagervorrichtungen können wechselweise betätigt werden, also gleichzeitig mit der einen eingelagert und der anderen ausgelagert werden bzw. das durch die äußere Ein-/Auslagervorrichtung herantransportierte Lagergut in einen Lagergutträger übergeben werden und zugleich oder kurz danach durch die innenliegende Ein-/Auslagervorrichtung auszulagerndes Lagergut auf die äußere Ein-/Auslagervorrichtung ausgeschoben werden. Gegenüber den aus der EP-C-0 022 441 bekannten Regelbediengerät weist die äußere Ein-/Auslagervorrichtung wenigstens eine Bewegungsachse weniger auf, so daß diese Aus-/Einlagervorrichtung bei gleicher Tragkraft leichter dimensioniert werden kann. Somit ist eine höhere Beschleunigung erreichbar, da die zur Entnahme/Einlagerung nötigen Bewegungsachsen auf nunmehr zwei Ein-/Auslagergeräte verteilt sind.

Von besonderem Vorteil ist dabei die sich gegenüberliegende Anordnung der beiden Ein-/Auslagervorrichtungen, da damit ein Lagergut gleichzeitig von beiden Ein-/Auslagervorrichtungen ergriffen und ein- bzw. ausgelagert werden kann. Eine derartige Verfahrensweise ist besonders vorteilhaft bei Lagergut mit ungleicher Massenverteilung, da durch den gleichzeitigen Angriff der beiden Ein-/Auslagervorrichtungen am Lagergut - die eine schiebt das Lagergut, während die andere es zieht - ein Verkanten des Lagergutes praktisch ausgeschlossen ist. Durch diese sehr sichere Überschiebebewegung kann Lagergut auch ohne gesonderte genannte Behälter direkt auf den Lagergutträgern angeordnet werden.

Neben der synchronen Bewegung der beiden Ein-/Auslagervorrichtungen, die das Lagergut zum Ausschieben oder zum Hereinziehen zwischen ihren Greifern festklemmen, können die beiden Ein-/Auslagervorrichtungen auch in Höhenrichtung synchron angetrieben werden, so daß sie zum Ein-/Auslagern zeitgleich am Lagergutträger bereitstehen.

Weitere vorteilhafte Ausgestaltungen sind Gegenstand der Unteransprüche und in der nachfolgenden Beschreibung an Hand mehrerer Ausführungsbeispiele in der Zeichnung näher beschrieben und erläutert. Es zeigen
- Fig. 1: eine perspektivische Darstellung eines Umlaufförderers;
- Fig. 2: eine Draufsicht auf eine erfindungsgemäße Nebeneinanderanordnung von mehreren Umlaufförderern;
- Fig. 3: eine Schnittdarstellung in Seitenansicht des Umlaufförderers gemäß Fig. 2.

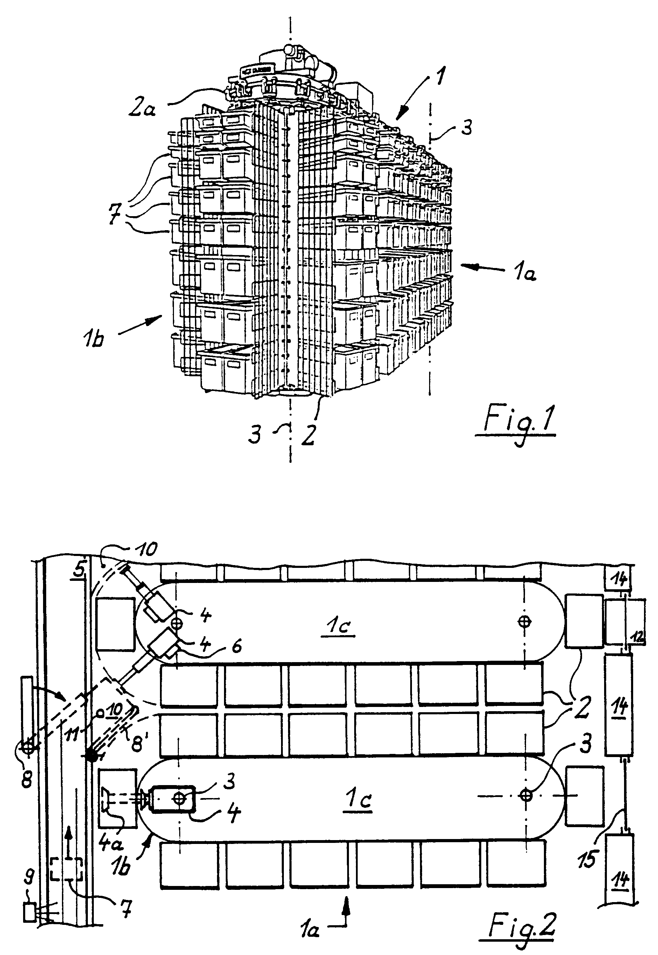

Fig. 1 zeigt in perspektivischer Darstellung einen Umlaufförderer 1 mit einer Vielzahl von Lagergutträgern 2, die mittels eine Aufhängung 2a an einer waagrechten Führung gelagert sind und in horizontaler Ebene um vertikale Achsen 3 umlaufen. In den Lagergutträgern 2 ist in mehreren Ebenen Lagergut 7 eingelagert. Entlang der Längsseite 1a des Umlaufförderers 1 bewegen sich die Lagergutträger 2 geradlinig, während sie im Umlenkbereich 1b halbkreisförmig um die Achse 3 umlaufen. Die Lagergutträger 2 umschließen dabei einen Freiraum 1c, wie aus Fig. 2 ersichtlich.

Aus Fig. 2 ist ferner die Enganordnung mehrerer Umlaufförderer 1 ersichtlich, wobei diese jeweils mit der geraden Längsseite 1a mit möglichst geringem Spalt aneinander anschließen. Somit ist die erfindungsgemäße Kompaktanordnung einer Vielzahl von Umlaufförderern 1 unmittelbar nebeneinander möglich. Der Freiraum 1c zwischen den umlaufenden Lagergutträgern 2 ist hier der Übersichtlichkeit halber vergrößert dargestellt. In dem Freiraum 1c ist im halbkreisförmigen Umlenkbereich 1b wenigstens eine Ein- bzw. Auslagervorrichtung 4 angeordnet, die hier beispielhaft als Pneumatikzylinder dargestellt ist, der durch Ausfahren eines Stößels 4a das im Lagergutträger 2 befindliche Lagergut 7 nach außen hin ausstoßen kann. An dem Stößel 4a ist zudem ein Saugkopf vorgesehen, so daß für die Einlagerung außerhalb des Umlaufförderers 1 befindliches Lagergut 7 bei der Verkürzung des Pneumatikzylinders 4 auf den Lagergutträger 2 gezogen wird.

Bei dem in Fig. 2 unten gezeichneten Umlaufförderer 1 ist die Ein-/Auslagervorrichtung 4 an der vertikalen Achse 3 gelagert und geführt, so daß die Ein-/Auslagervorrichtung 4 höhenbeweglich zu den in Fig. 1 dargestellten einzelnen Ebenen des Lagergutes 7 ist. Bei dem in Fig. 2 dargestellten zweiten Umlaufförderer sind die beiden Ausstoßvorrichtungen 4 an gesonderten Vertikalführungen 6 höhenverfahrbar gelagert. Auch hier sind die Ein-/Auslagervorrichtungen 4 als Teleskopzylinder dargestellt, jedoch kann auch ein Mitnehmerarm an einem Kettentrieb, wie in der EP-C-0 022 441 gezeigt, Anwendung finden. Ebenso ist es möglich als Ein-/Auslagervorrichtung ein Scherengitter, Zahnstangenantriebe oder ähnliche translatorische Antriebe zu verwenden.

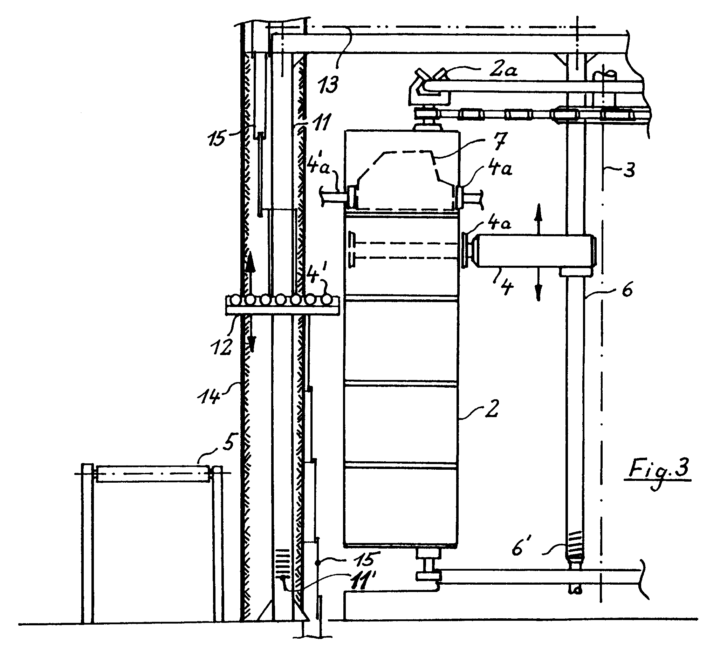

Vor den Umlenkbereichen 1b der Umlaufförderer 1 ist eine Zu-/Abfördereinrichtung 5 angeordnet, die als Förderband oder als Rollenbahn (vgl. Fig. 3) ausgebildet ist. Entlang der Zu-/Abfördereinrichtung ist hier ein Erkennungsgerät 9 vorgesehen, das beispielsweise durch einen Barcode-Leser gebildet ist, um auf dem Förderband transportiertes Lagergut für die automatische Einlagerung zu identifizieren. Das Erkennungsgerät 9 kann beispielsweise eine Weiche 8 kontrollieren, die das zutransportierte Lagergut 7 auf einen Nebentisch 10 umlenkt, der im etwa dreiecksförmigen Sektor zwischen jeweils zwei Umlaufförderern 1 und dem Förderband 5 vorgesehen ist. Nach der Ausschleusung des Lagergutes 7 vom Förderband 5 auf den Nebentisch 10 wird letzterer beispielsweise mittels eines Hubstempels 11 (vgl. Fig. 3) auf die entsprechende Lagergutebene hochgehoben bzw. abgesenkt und von der ausgefahrenen Ein-/Auslagervorrichtung 4 mittels des oben beschriebenen Saugkopfes erfaßt und nach innen auf den Lagergutträger 2 gezogen.

Während in dem einen der Umlaufförderer 1 die Ausstoßbewegung der Ein-/Auslagervorrichtung 4 senkrecht zu dem Förderband 5 ausgerichtet ist, sind bei dem anderen in Fig. 2 darüber dargestellten Umlaufförderer die Ausstoß- bzw. Einziehbewegung unter etwa 45° zum Förderband 5 und radial zur Achse 3 angeordnet. Durch diese im oberen Bereich der Fig. 2 gezeigte Anordnung ist es möglich, zwei Lagergutträger 2 gleichzeitig zu beladen bzw. an einem einzulagern und am anderen auszulagern. Hierzu wird der Umlaufförderer, entgegen der dargestellten Stellung, um etwa 45° weiterbewegt, so daß sich jeweils zwei Lagergutträger 2, bezogen auf die Drehbewegung um die Achse 3, im halbkreisförmigen Umlenkbereich 1b korrespondierend mit den im oberen Bereich der Fig. 2 dargestellten beiden Ein-/Auslagervorrichtungen 4 befinden.

An der rechten Seite der Fig. 2 kann spiegelbildlich ebenso wie eine Ein/Auslagerung vorgenommen werden. Hierbei sind Wände 14 als Bestandteil eines Lagerhauses angedeutet, zwischen denen Schiebe- oder Rolltore 15 auf der Breite des Lagergutträgers 2 vorgesehen sind. Gemäß Fig. 3 können diese Schiebetore 15 zusammen mit der Auf-/Abbewegung eines Schlittens 12 mitbewegt weden, so daß jeweils nur die zur Ein-/Auslagerung des Lagergutes nötige öffnung geöffnet ist. Diese Anordnung eignet sich insbesondere für staubfreie, klimatisierte oder gekühlte Lageranlagen.

In Fig. 3 ist in Seitenansicht der Umlenkbereich 1b vergrößert dargestellt. Gegenüber der Fig. 2 ist zwischen dem Lagergutträger 2 und dem Förderband 5 eine zweite Ein-/Auslagervorrichtung 4′ vorgesehen, die im wesentlichen aus einer Führungsschiene 11 und einem höhenbewegbaren Schlitten 12 besteht. Der Schlitten 12 weist einen Rollboden auf, der als zusätzliche Unterstützung der Ein-/Auslagervorrichtung gemeinsam mit der innenliegenden Ein-/Auslagervorrichtung 4, dient. Diese Verfahrensweise ist im obersten Abteil des Lagergutträgers 2 dargestellt, wobei sowohl die innenliegende 4 als auch die außen angeordnete Ein-/Auslagervorrichtung 4′ zugleich von gegenüberliegenden Seiten am Lagergut 7 mit ihren beiden Saugköpfen 4a und 4′a angreifen. Hierdurch ist das Lagergut 7 zwischen den beiden Saugköpfen 4a und 4′a fest eingespannt und kann sich bei der Verschiebebewegung nicht verkanten oder verdrehen.

Weiterhin ist der Schlitten 12 mit oberen und unteren Schiebetoren 15 verbunden, so daß der Bereich zwischen den Wänden 14 in jeder Stellung des Schlittens 12 zumindest größtenteils geschlossen ist.

Durch diese Anordnung der Schlitten 12 jeweils zwischen den Wänden 14 läßt sich eine gesonderte Fahrgasse für das Regalbediengerät, wie dies z.B. bei der EP-A-0 286 986 nötig ist, einsparen.

Die Führungen 6 und 11 für die beiden Ein-/Auslagervorrichtungen können sowohl starre Führungen sein, an denen das höhenbewegliche Teil mittels einem Zahnstangenprofil 11′ antreibbar ist, wie dies im unteren Teil der Führung 11 schematisch dargestellt ist. Die Führung 6 bzw. 11 kann jedoch auch durch eine Gewindespindel, insbesondere eine Kugelrollspindel gebildet sein, wie dies mit 6′ im unteren Bereich der Führung 6 angedeutet ist. Sofern in vorteilhafter Weise beide Führungen 6 und 11 als Spindeln ausgebildet sind, können beide gemeinsam über einen schematisch dargestellten Kettentrieb 13 synchron angetrieben werden, so daß je nach angewähltem Stellplatz die beiden Ein-/Auslagervorrichtungen 4 und 4′ sich jeweils gegenüberstehen. Bei dieser Ausführung wirkt bei der Entnahme bzw. Einlagerung jeweils ein Stößelarm 4a auf das Lagergut 7 ziehend, während der andere Stößelarm 4′a gleichzeitig schiebend auf das Lagergut einwirkt. Damit wird in besonders vorteilhafter Weise ein Verkanten von Lagergut 7 selbst mit ungleichmäßiger Masseverteilung zuverlässig verhindert, so daß viele Lagergüter unverpackt und ohne zusätzlichen Behälter direkt in den Lagergutträger 2 eingelagert werden können.

## Patentansprüche

1. Lagervorrichtung
- mit wenigstens einem Umlaufförderer (1), dessen Lagergutträger (2) in horizontaler Ebene an den Längsseiten geradlinig und an Umlenkbereichen um vertikale Achsen (3) umlaufen, und
- einer Ein-/Auslagervorrichtung (4) zur Ein-/Auslagerung von Lagergut, die im Freiraum (1c) zwischen den Lagerguttragern angeordnet ist,
dadurch gekennzeichnet, daß
die Ein-/Auslagervorrichtung (4) am Umlenkbereich (1b) der Lagergutträger (2) im Freiraum (1c) angeordnet ist.

2. Lagervorrichtung nach Anspruch 1, dadurch gekennzeichnet, daß mehrere Umlaufförderer (1) mit ihren Längsseiten (1a) unmittelbar aneinander angereiht sind.

3. Lagervorrichtung nach Anspruch 2, dadurch gekennzeichnet, daß den Umlaufförderern (1) vor ihren Umlenkbereichen (1b) eine gemeinsame Zu-/Abfördereinrichtung (5) zugeordnet ist.

4. Lagervorrichtung nach Anspruch 1, dadurch gekennzeichnet, daß die Ein-/Auslagervorrichtung (4) an einer vertikalen Führung (6) zu den jeweiligen Lagergutträgern (2) höhenverschiebbar angeordnet ist.

5. Lagervorrichtung nach Anspruch 4, dadurch gekennzeichnet, daß die Führung (6) achsgleich mit der vertikalen Achse (3) angeordnet ist.

6. Lagervorrichtung nach Anspruch 1, dadurch gekennzeichnet, daß der im Freiraum (1c) vorgesehenen Ein-/Auslagervorrichtung (4) außen am Umlenkbereich (1b) eine zweite Ein-/Auslagervorrichtung (4′) zugeordnet ist.

7. Lagervorrichtung nach Anspruch 6, dadurch gekennzeichnet, daß die erste und zweite Ein-/Auslagervorrichtung (4,4′) sich gegenüberliegend angeordnet sind.

8. Lagervorrichtung nach Anspruch 6 oder 7, dadurch gekennzeichnet, daß die erste und zweite Ein-/Auslagervorrichtung (4,4′) in Vertikalrichtung synchron höhenverstellbar angetrieben sind.

9. Lagervorrichtung nach Anspruch 1, dadurch gekennzeichnet, daß die Bewegungsrichtung der Ein-/Auslagervorrichtung (4) radial zur vertikalen Achse (3) ausgerichtet ist.

10. Lagervorrichtung nach einem der Ansprüche 6 bis 8, dadurch gekennzeichnet, daß die beiden Ein-/Auslagervorrichtungen (4, 4') unter Erfassen des Lagergutes (7) an zwei sich gegenüberliegenden Seiten in Ein- oder Auslagerrichtung synchron angetrieben sind.

## Claims

1. A storage installation comprising
- at least one rotary conveyer (1) the stock bins (2) of which rotate in a straight-lined manner at its longitudinal sides in a horizontal plane and about vertical axes (3) in turn regions, and
- a storing-in/-out means (4) for storing in/out storage goods, which means is located in the clearance (1c) between said stock bins,
characterized in that
said storing-in/-out means (4) is arranged at the turn region (1b) of said stock bins (2) in said clearance (1c).

2. The storage installation of claim 1, characterized in that several rotary conveyers (1) are consecutively aligned directly by their longitudinal sides (1a).

3. The storage installation of claim 2, characterized in that in front of their turn regions (1b) the rotary conveyers (1) have associated thereto a common feeding/defeeding device (5).

4. The storage installation of claim 1, characterized in that said storing-in/-out means (4) is arranged to be vertically adjusted towards the respective stock bins (2) at a vertical guidance (6).

5. The storage installation of claim 4, characterized in that said guidance (6) and said vertical axis (3) are coaxial.

6. The storage installation of claim 1, characterized in that said storing-in/-out means (4) provided in the clearance (1c) has associated thereto another storing-in/-out means (4') at the periphery of said turn region (1b).

7. The storage installation of claim 6, characterized in that said first and second storing-in/-out means (4, 4') are arranged to oppose each other.

8. The storage installation of either claim 6 or 7, characterized in that the first and second storing-in/out means (4, 4') are driven synchronously in vertical direction and may be vertically adjusted.

9. The storage installation of claim 1, characterized in that the direction of movement of said storing-in/-out means (4) is radially aligned to said vertical axis (3).

10. The storage installation of any of claims 6 to 8, characterized in that the two storing-in/-out means (4, 4') are gripping the storage good (7) and are synchronously driven in storing-in or -out direction at two opposing sides.

## Revendications

1. Installation d'entrepôt
- comprenant au moins un transporteur circulant (1) dont les supports de marchandises entreposées (2) circulent dans un plan horizontal, en ligne droite sur les côtés longitudinaux et autour d'axes verticaux (3) dans les zones de renvoi, et
- un dispositif d'entrée/sortie d'entrepôt (4), pour la mise en entrepôt/sortie d'entrepôt de marchandises, est placé dans l'espace libre (1c) entre les supports de marchandises entreposées (2),
caractérisée en ce que
le dispositif d'entrée/sortie d'entrepôt (4) est placé dans la zone de renvoi (1b) des supports de marchandises entreposées (2), à l'intérieur de l'espace libre (1c).

2. Installation d'entrepôt selon la revendication 1, caractérisée en ce que plusieurs transporteurs circulants (1) sont directement alignés les uns aux autres par leurs côtés longitudinaux (1a).

3. Installation d'entrepôt selon la revendication 2, caractérisée en ce qu'un dispositif commun d'amenée/évacuation (5) est coordonné aux transporteurs circulants (1) et placé devant leurs zones de renvoi (1b).

4. Installation d'entrepôt selon la revendication 1, caractérisée en ce que le dispositif d'entrée/sortie d'entrepôt (4) est disposé mobile en hauteur, par rapport aux différents supports de marchandises entreposées (2), sur un guide vertical (6).

5. Installation d'entrepôt selon la revendication 4, caractérisée en ce que le guide (6) est coaxial à l'axe vertical (3).

6. Installation d'entrepôt selon la revendication 1, caractérisée en ce qu'un second dispositif d'entrée/sortie d'entrepôt (4'), placé extérieurement sur la zone de renvoi (1b), est adjoint au dispositif d'entrée/sortie d'entrepôt (4) prévu dans l'espace libre (1c).

7. Installation d'entrepôt selon la revendication 6, caractérisée en ce que le premier et le second dispositif d'entrée/sortie d'entrepôt (4, 4') sont disposés face à face.

8. Installation d'entrepôt selon la revendication 6 ou 7, caractérisée en ce que les premier et second dispositifs d'entrée/sortie d'entrepôt (4, 4') sont commandés pour être déplacés en hauteur, en direction verticale, de façon synchrone.

9. Installation d'entrepôt selon la revendication 1, caractérisée en ce que la direction de mouvement du dispositif d'entrée/sortie d'entrepôt (4) est orientée radialement par rapport à l'axe vertical (3).

10. Installation d'entrepôt selon une des revendications 6 à 8, caractérisée en ce que les deux dispositifs d'entrée/sortie d'entrepôt (4, 4') sont commandés de façon synchrone pour saisir la marchandise (7) sur deux côtés opposés dans la direction de mise en entrepôt ou de sortie d'entrepôt.
